# EUROPÄISCHE PATENTANMELDUNG

(11) **EP 1 440 620 A1**
(43) Veröffentlichungstag der Anmeldung: **28.07.2004**
(21) Anmeldenummer: 03029835.0
(22) Anmeldetag: 24.12.2003
(51) Int. Cl.: A23G 3/00

(54) **Bonbon**

(30) Priorität: 23.01.2003 DE 20300983 U
(71) Anmelder: Mederer GmbH, 90763 Fürth (DE)
(72) Erfinder: Mederer, Herbert, 90768 Fürth (DE)
(74) Vertreter: Rau, Manfred, Dr. Dipl.-Ing.

(57) **Zusammenfassung**

Ein mehrschichtiger Bonbon mit einem Kern (2) aus einer Fruchtgummi-Masse, mit einer den Kern (2) umhüllenden fetthaltigen Schicht (3) und mit einer die fetthaltige Schicht (3) umhüllenden, zuckerhaltigen Außenschicht (4) bietet ein neues Geschmackserlebnis gegenüber bekannten Bonbons.

## Beschreibung

Die Erfindung betrifft einen mehrschichtigen Bonbon. Derartige Bonbons sind z. B. als Gelee-Bonbon mit Schokoladenüberzug bekannt.

Es besteht der Bedarf an Bonbons, die gegenüber diesen bekannten Bonbons ein anderes, neues Geschmackserlebnis bieten.

Die Aufgabe, diesen Bedarf zu decken, löst ein Bonbon mit den im Anspruch 1 genannten Merkmalen.

Bei einem derartigen Bonbon ergibt sich eine neue Geschmackskombination, die gebildet wird aus dem fruchtigen Geschmack der Fruchtgummi-Masse einerseits und der cremeartigen Konsistenz und dem hierdurch bestimmten Geschmack der fetthaltigen Schicht andererseits. Unterstützt wird das Geschmackserlebnis zusätzlich durch die zuckerhaltige Außenschicht.

Eine fetthaltige Schicht nach Anspruch 2 kann in verschiedenen Geschmacksrichtungen ausgeführt sein. Diese Geschmacksrichtungen können insbesondere auf den jeweiligen Fruchtgeschmack der Fruchtgummi-Masse abgestimmt sein.

Eine zuckerhaltige Außenschicht nach Anspruch 4 gibt in Verbindung mit der darunter liegenden, weicheren, fetthaltigen Schicht nach Anspruch 3, insbesondere beim Kauen des Bonbons, aufgrund des Aufbrechens der Dragierung ein zusätzliches Geschmackserlebnis.

Eine Außenschicht nach Anspruch 5 lässt sich gefällig einfärben. Insbesondere lässt sich eine Vielzahl derartiger Bonbons in verschiedenen Farben ansprechend verpacken.

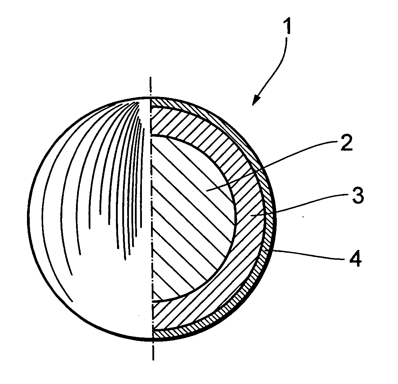

Ein Ausführungsbeispiel der Erfindung wird nachfolgend anhand der Zeichnung näher erläutert. Die einzige Figur zeigt einen teilweise aufgeschnittenen Bonbon.

Der insgesamt mit 1 bezeichnete Bonbon hat einen Durchmesser von ungefähr 15 mm und weist einen Kern 2 aus einer Fruchtgummi-Masse auf. Der Kern 2 hat einen Durchmesser von ungefähr 10 mm. Umhüllt wird der Kern 2 von einer fetthaltigen Schicht 3 in Form einer Fettglasur, d. h. einer schokolendenähnlichen Masse, bei der Kakaobutter durch ein anderes Pflanzenfett ersetzt wurde. Die fetthaltige Schicht 3 hat eine Stärke von etwa 2 mm und enthält eine Geschmacksträger-Substanz in Form von Joghurt, welches in Pulverform in die fetthaltige Schicht 3 eingerührt wurde. Anstelle der Fettglasur kann als fetthaltige Schicht 3 auch eine Schokolade, z. B. weiße Schokolade, eingesetzt sein.

Die fetthaltige Schicht 3 wiederum ist umhüllt von einer zuckerhaltigen Außenschicht 4, die als dünne Dragierung ausgeführt ist. Die zuckerhaltige Außenschicht 4 ist eingefärbt. Hierfür können bekannte Lebensmittelfarben eingesetzt werden. Die zuckerhaltige Außenschicht 4 weist eine Stärke von deutlich unter 1 mm auf.

## Patentansprüche

1. Bonbon (1)
- mit einem Kern (2) aus einer Fruchtgummi-Masse,
- mit einer den Kern (2) umhüllenden, fetthaltigen Schicht (3) und
- mit einer die fetthaltige Schicht (3) umhüllenden, zuckerhaltigen Außenschicht (4).

2. Bonbon nach Anspruch 1, **dadurch gekennzeichnet, dass** die fetthaltige Schicht (3) eine Geschmacksträger-Substanz, insbesondere Joghurt, enthält.

3. Bonbon nach Anspruch 2, **dadurch gekennzeichnet, dass** die fetthaltige Schicht (3) cremeartig ausgebildet ist.

4. Bonbon nach einem der Ansprüche 1 bis 3, **dadurch gekennzeichnet, dass** die zuckerhaltige Außenschicht (4) als dünne Dragierung ausgeführt ist.

5. Bonbon nach einem der Ansprüche 1 bis 4, **gekennzeichnet durch** eine eingefärbte zuckerhaltige Außenschicht (4).
